# EUROPEAN PATENT SPECIFICATION

(11) **EP 3 279 992 B1**
(45) Date of publication and mention of the grant of the patent: **11.09.2019**
(21) Application number: 16771632.3
(22) Date of filing: 08.03.2016
(51) Int. Cl.: H01M 8/04228, H01M 8/04303, H01M 8/0612, H01M 8/0432, H01M 8/04746, C01B 3/38

(54) **FUEL CELL SYSTEM**
BRENNSTOFFZELLENSYSTEM
SYSTÈME DE PILE À COMBUSTIBLE

(30) Priority: 30.03.2015 JP 2015067874
(43) Date of publication of application: 07.02.2018
(73) Proprietor: Panasonic Intellectual Property Management Co., Ltd., Osaka-shi, Osaka 540-6207 (JP)
(72) Inventor: KOKUBU, Hirofumi, Osaka-shi, Osaka 540-6207 (JP); UMEDA, Takahiro, Osaka-shi, Osaka 540-6207 (JP); YOSHIMURA, Akihisa, Osaka-shi, Osaka 540-6207 (JP); NAKAMURA, Akinari, Osaka-shi , Osaka 540-6207 (JP)
(74) Representative: Grünecker Patent- und Rechtsanwälte PartG mbB
(86) International application number: PCT/JP2016/001252
(87) International publication number: WO 2016/157738

(56) References cited:
- JP-A- 2005 332 834
- JP-A- 2006 001 780
- JP-A- 2007 335 332
- JP-A- 2010 015 937
- JP-A- 2012 059 659
- JP-A- 2014 172 815
- JP-A- 2014 172 815
- US-A1- 2006 083 956
- US-A1- 2012 021 315

## Description

### TECHNICAL FIELD

The present invention relates to a fuel cell system which generates electricity from hydrogen-containing gas.

### BACKGROUND ART

A conventional fuel cell system of a type described above includes a fuel cell which generates electricity by utilizing electrochemical reaction between oxygen in air, and hydrogen in fuel gas containing hydrogen gas as a main component.

When oxygen enters an anode of the fuel cell in a storage state of the fuel cell after electricity generation has stopped, the anode may be oxidized. The oxidized anode is reduced when hydrogen is supplied to the anode in response to a start of the fuel cell system. However, repeated stops and starts of the fuel cell system (i.e., repeated oxidation and reduction of anode) accelerate dissolution of a Ruthenium (Ru) catalyst contained in a material of Pt-Ru/C constituting the anode. The Ru catalyst is generally used for securing resistance of an anode to carbon monoxide poisoning.

Accordingly, with development of dissolution of Ru, the anode deteriorates by deterioration of resistance to carbon monoxide poisoning. In addition, a reverse current mechanism functions when the anode in the state containing oxygen receives supply of hydrogen. This reverse current mechanism oxidizes carbon constituting an electrode material of a cathode. In this case, the cathode may corrode and deteriorate.

Accordingly, a following fuel cell system has been proposed to reduce the foregoing deterioration of the anode and cathode (see PTL 1, for example).

A fuel cell system discussed in PTL 1 performs a hydrogen-containing gas supply process for supplying hydrogen-containing gas to an anode in a state where gas supply to a cathode is stopped, at a set time in a stop-state maintaining step after a stop of electricity generation by a fuel cell.

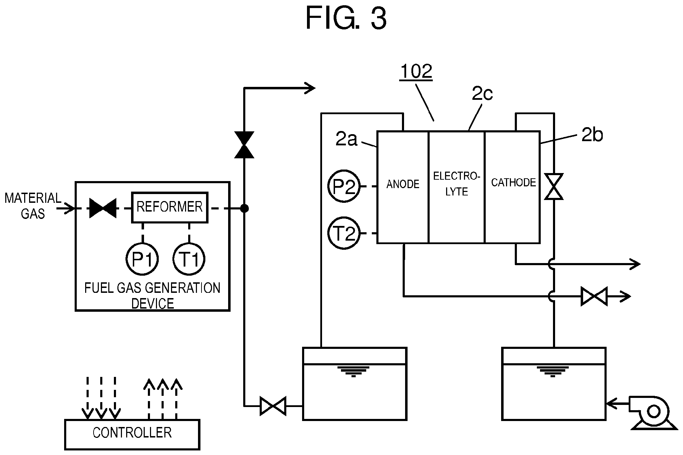

More specifically, the fuel cell system according to PTL 1 includes fuel cell 102 which generates electricity from fuel gas, and oxidant gas containing oxygen as illustrated in FIG. 3. Fuel cell 102 includes electrolyte 2c between anode 2a and cathode 2b.

The fuel cell system thus configured operates in a following manner in a stop-storage state for stopping output of power from fuel cell 102.

Initially, fuel cell 102 performs an operation stop shift step. Thereafter, a hydrogen-containing gas supply process is performed to supply hydrogen-containing gas to anode 2a at a set time in a period for maintaining the stop state. In this case, the hydrogen-containing gas supply process is performed in a state where gas supply to cathode 2b is stopped.

In a subsequent stop-storage step, an anode separation process is performed to close a gas supply channel to anode 2a, and open a gas discharge channel from anode 2a. Thereafter, a hydrogen-containing gas supply process is performed at a set time during the anode separation process.

Accordingly, the fuel cell system of PTL 1 supplies hydrogen-containing gas to anode 2a at an appropriate time during the stop-state maintaining step to increase pressure at anode 2a. Thus, even when a temperature change occurs within fuel cell 102, entrance of oxygen to anode 2a from an outside of fuel cell 102, or from cathode 2b or the like becomes difficult.

In addition, even if oxygen enters cathode 2b, the oxygen is consumed by reaction to the hydrogen-containing gas supplied to anode 2a. Thus, deterioration of anode 2a can be reduced by reduction of oxidation of anode 2a. Moreover, deterioration of cathode 2b can be similarly reduced by reduction of oxidation of cathode 2b caused by the reverse current mechanism described above.

Furthermore, the fuel cell system described above does not supply gas to cathode 2b. This configuration eliminates a necessity of a special piping system, such as a gas conduction channel for connection between gas channels of anode 2a and cathode 2b. Accordingly, the fuel cell system achieves cost reduction, and a need of complicated operation procedures, such as switching of gas channels and gas replacement is eliminated.

In addition, gas present in the gas discharge channel on a downstream side of anode 2a is hydrogen-containing gas having been originally present around anode 2a. In general, a capacity of the gas discharge channel of anode 2a provided on a downstream side of anode 2a is considerably larger than a capacity of the gas channel of anode 2a. Accordingly, even when gas reversely flows from the gas discharge channel on the downstream side of anode 2a toward anode 2a, a possibility of oxidation of anode 2a is low. As a result, oxidation of anode 2a can be reduced while maintaining presence of hydrogen-containing gas at anode 2a.

As described above, the fuel cell system of PTL 1 performs the hydrogen-containing gas supply process for supplying hydrogen-containing gas to anode 2a in the state where gas supply to cathode 2b is stopped, at the set time in the stop-state maintaining step after a stop of electricity generation by the fuel cell. In this case, the set time is determined with reference to various values allowed for reference, such as pressure and time, during the operation of the fuel cell.

However, when pressure is referred to for determining the set time, a dedicated pressure gauge is required for monitoring pressure. This necessity of a pressure gauge raises the cost of the fuel cell system. On the other hand, when time is referred to for determining the set time, it is difficult to accurately determine whether or not the hydrogen-containing gas supply process has been performed. In this case, hydrogen-containing gas cannot be appropriately supplied to anode 2a. As a result, performance of the fuel cell may deteriorate. JP 2014 172815 A relates to a hydrogen generation device with a hydrogen generator, a combustor and a flame detector.

### Citation List

### Patent Literature

PTL 1: Unexamined Japanese Patent Application Publication No. 2010-86949

### SUMMARY OF THE INVENTION

The present invention provides a fuel cell system capable of accurately determining whether a hydrogen-containing gas supply process has been performed without necessity of adding a dedicated measuring instrument.

More specifically, the fuel cell system according to the present invention is defined in claim 1.

According to this configuration, at the predetermined time after operation stops of the hydrogen generator and the fuel cell, the material gas is supplied to at least the hydrogen generator, and ignition is performed at the combustor. Accordingly, a combustion state of the combustor is detected by the combustion detector to accurately determine whether or not a hydrogen-containing gas supply process has been performed. As a result, performance deterioration of the fuel cell is effectively reduced by performing the hydrogen-containing gas supply process for supplying hydrogen-containing gas to the fuel cell. Further advantageous embodiments are defined in the dependent claims.

### BRIEF DESCRIPTION OF DRAWINGS

FIG. 1 is a schematic view illustrating a fuel cell system according to a first exemplary embodiment of the present invention.
FIG. 2 is a schematic view illustrating a fuel cell system according to a second exemplary embodiment of the present invention.
FIG. 3 is a schematic view illustrating a conventional fuel cell system.

### DESCRIPTION OF EMBODIMENTS

Exemplary embodiments according to the present invention are hereinafter described with reference to the drawings. The present invention is not limited to the exemplary embodiments presented herein.

### FIRST EXEMPLARY EMBODIMENT

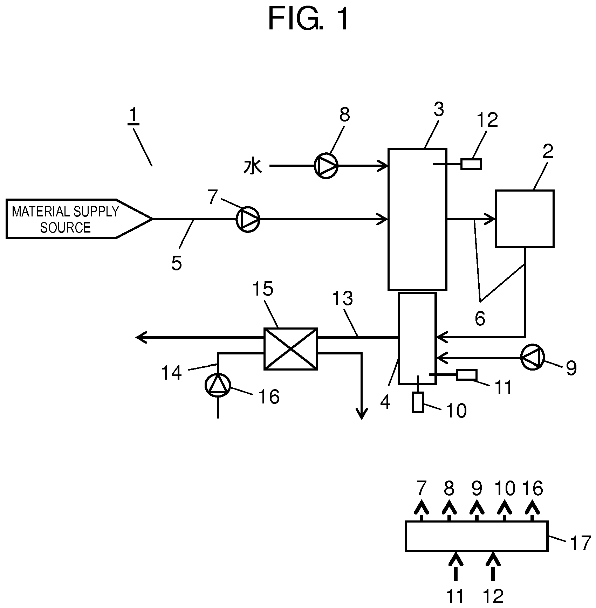

A configuration of fuel cell system 1 according to a first exemplary embodiment of the present invention is hereinafter described with reference to FIG. 1.

FIG. 1 is a block diagram illustrating an example of the configuration of fuel cell system 1 according to the first exemplary embodiment.

As illustrated in FIG. 1, fuel cell system 1 according to the present exemplary embodiment includes fuel cell 2, hydrogen generator 3, burner 4 as a combustor, material gas channel 5, fuel gas channel 6, booster pump 7 as a material supplying unit, water pump 8, air fan 9, igniter 10 as an ignition device, flame rod 11 as a combustion detector, temperature sensor 12, exhaust gas channel 13, heat recovery channel 14, heat exchanger 15, heat recovery pump 16, and controller 17.

Fuel cell 2 generates electricity by utilizing electrochemical reaction between hydrogen and oxygen. Hydrogen generator 3 reforms material gas supplied by pumping of booster pump 7 via material gas channel 5 and generates fuel gas rich in hydrogen which is consumed in generating electricity by fuel cell 2. Burner 4 is provided to heat hydrogen generator 3. Material gas channel 5 is a channel through which material gas is supplied to hydrogen generator 3 by pumping of booster pump 7. Fuel gas channel 6 is a channel through which fuel gas discharged from hydrogen generator 3 is supplied to fuel cell 2. The fuel gas discharged from fuel cell 2 is supplied to burner 4.

Booster pump 7 is disposed in a course of material gas channel 5 to boost material gas and supplies the boosted material gas to hydrogen generator 3. Water pump 8 supplies water to hydrogen generator 3. Air fan 9 supplies outside air to burner 4. Igniter 10 ignites material gas supplied to burner 4. Flame rod 11 detects presence or absence of combustion of burner 4. Temperature sensor 12 detects a temperature of hydrogen generator 3.

Exhaust gas channel 13 is a channel through which exhaust gas is discharged from burner 4. Heat recovery channel 14 is a channel through which heat of exhaust gas is recovered from exhaust gas channel 13. Heat exchanger 15 exchanges heat between exhaust gas channel 13 and heat recovery channel 14. Heat recovery pump 16 supplies a heat medium, such as water, to heat recovery channel 14.

Controller 17 controls at least booster pump 7, water pump 8, air fan 9, igniter 10, and heat recovery pump 16. Controller 17 further detects presence or absence of combustion within burner 4 based on detection by flame rod 11, and detects a temperature of hydrogen generator 3 based on detection by temperature sensor 12. Based on the presence or absence of combustion of burner 4 and the temperature of hydrogen generator 3 thus detected, controller 17 controls operations of the constituent elements described above and other components.

Burner 4, igniter 10, and flame rod 11 corresponding to the constituent elements according to the present exemplary embodiment are specific examples of a combustor, an ignition device, and a combustion detector, respectively.

Fuel cell system 1 according to the present exemplary embodiment is configured as described above.

Operations and effects of fuel cell system 1 are hereinafter described.

After completion of a start step of fuel cell system 1, controller 17 initially starts an electricity generation step. In the electricity generation step, booster pump 7 supplies material gas from a material supply source to hydrogen generator 3 via material gas channel 5 under control by controller 17. Thereafter, temperature sensor 12 detects a temperature of hydrogen generator 3 heated by combustion within burner 4. When it is detected by temperature sensor 12 that the temperature of hydrogen generator 3 has increased to a predetermined temperature or higher, water pump 8 supplies water to hydrogen generator 3 under control by controller 17. This process prevents carbon deposition by a catalyst of hydrogen generator 3.

Thereafter, hydrogen generator 3 reforms the supplied material gas and water by using the catalyst. Hydrogen generator 3 thereby generates fuel gas rich in hydrogen.

The fuel gas generated by hydrogen generator 3 is subsequently supplied to an anode of fuel cell 2 via fuel gas channel 6. In this case, fuel gas not consumed for electricity generation by fuel cell 2 is supplied from fuel cell 2 to burner 4 via fuel gas channel 6. On the other hand, air is supplied to a cathode of fuel cell 2 as oxidant gas. Fuel cell 2 thus generates electricity by utilizing electrochemical reaction between the supplied fuel gas and oxidant gas. During this reaction, heat is generated as well as electricity. Accordingly, a temperature of fuel cell 2 becomes higher than an outside temperature.

Fuel cell 2 generates DC power, and outputs the DC power to the outside. The output DC power is converted into AC power by an inverter (not illustrated). The AC power thus converted is supplied to a load (e.g., electric device for home use) in cooperation with a power system.

As described above, burner 4 burns fuel gas not consumed by fuel cell 2 for electricity generation and discharged from fuel cell 2. Combustion heat thus generated from the fuel gas is supplied to hydrogen generator 3 to heat hydrogen generator 3. As a result, reaction efficiency at hydrogen generator 3 is improved.

Fuel cell system 1 operates in the manner described above.

Hereinafter, a specific operation of a stop-storage method performed by fuel cell system 1 according to the present exemplary embodiment is described.

After completion of the electricity generation step of fuel cell system 1, controller 17 shifts to a stop step to start a stop operation. In the stop step, controller 17 decreases supply of fuel gas and oxidant gas to fuel cell 2, and then stops only supply of oxidant gas. At this time, only fuel gas is supplied to fuel cell 2. Accordingly, in fuel cell 2, oxygen remaining in the cathode reacts with fuel gas supplied to the anode. In this condition, cell voltage of fuel cell 2 sharply drops. When the cell voltage drops to approximately 0.2 V, for example, controller 17 stops supply of fuel gas to the anode of fuel cell 2 to end the stop step.

When fuel gas supply to the anode of fuel cell 2 stops in response to the end of the stop step of fuel cell system 1, temperatures of hydrogen generator 3 and fuel cell 2 decrease to approximately the outside temperature by natural cooling. In this case, fuel gas channel 6 and exhaust gas channel 13 are opened to the atmosphere in the present exemplary embodiment. Accordingly, air is sucked from the atmosphere toward the anode of fuel cell 2 via exhaust gas channel 13, burner 4, and fuel gas channel 6 in accordance with decrease in the temperatures of hydrogen generator 3 and fuel cell 2.

As described above, the anode of fuel cell 2 is oxidized when oxygen enters the anode. The oxidized anode is reduced when hydrogen is supplied to the anode with a start of fuel cell system 1. Repeated stops and starts of fuel cell system 1 accelerate dissolution of a Ru catalyst contained in Pt-Ru/C which constitutes the anode. When dissolution of the Ru catalyst develops, the anode deteriorates by deterioration of resistance of the anode to carbon monoxide poisoning.

Accordingly, fuel cell system 1 of the present exemplary embodiment performs a following hydrogen-containing gas supply process to prevent entrance of oxygen into the anode of fuel cell 2.

More specifically, after an elapse of a predetermined time from the end of the stop step, or after an elapse of a predetermined time from the end of the previous hydrogen-containing gas supply process, booster pump 7 supplies material gas to hydrogen generator 3 under control by controller 17.

Simultaneously, water pump 8 supplies water to hydrogen generator 3 under control by controller 17 while the temperature of hydrogen generator 3 detected by temperature sensor 12 is a predetermined temperature or higher. This process prevents carbon deposition by a catalyst of hydrogen generator 3.

Fuel gas is subsequently supplied to the anode of fuel cell 2 from hydrogen generator 3. The fuel gas discharged from the anode of fuel cell 2 is supplied to burner 4.

Thereafter, air fan 9 supplies air to burner 4 under control by controller 17. Subsequently, igniter 10 ignites fuel gas within burner 4 under control by controller 17. Controller 17 thus detects a combustion state inside burner 4 based on detection by flame rod 11. Accordingly, whether or not fuel gas has been supplied to the anode of fuel cell 2 is accurately checked. More specifically, it is determined that fuel gas has been supplied to burner 4 via the anode of fuel cell 2 based on detection of a combustion state inside burner 4 by flame rod 11. Accordingly, it is determined that fuel gas is reliably supplied to the anode of fuel cell 2.

As described above, according to fuel cell system 1 of the present exemplary embodiment, controller 17 operates booster pump 7 such that material gas is supplied to at least hydrogen generator 3 at a predetermined time after an operation stop of hydrogen generator 3. Controller 17 further controls igniter 10 such that ignition takes place at burner 4. Thereafter, controller 17 detects combustion inside burner 4 based on detection by flame rod 11. Controller 17 therefore accurately determines whether or not the hydrogen-containing gas supply process for supplying hydrogen-containing gas to the anode has been performed. As a result, performance deterioration of fuel cell 2 is reduced by reduction of deterioration of resistance of the anode to carbon monoxide poisoning.

According to fuel cell system 1 of the present exemplary embodiment, controller 17 stops booster pump 7 at the time of detection of combustion inside burner 4 based on detection by flame rod 11. Controller 17 thereby stops supply of material gas to hydrogen generator 3. Accordingly, a consumption amount of material gas decreases by prevention of wasteful consumption of material gas.

Moreover, according to fuel cell system 1 of the present exemplary embodiment, heat recovery pump 16 operates under control by controller 17 during the hydrogen-containing gas supply process. Thereafter, heat exchanger 15 exchanges heat between exhaust gas produced by combustion at burner 4 and a heat medium of heat recovery channel 14, such as water. This process decreases a temperature of combustion exhaust gas flowing within exhaust gas channel 13 during the hydrogen-containing gas supply process. In other words, heat of the combustion exhaust gas is recovered via water or other types of heat medium of heat recovery channel 14 by using heat exchanger 15. Accordingly, freezing of water or other types of heat medium flowing within heat recovery channel 14 can be prevented even at a low outside temperature, such as in a winter season.

According to fuel cell system 1 of the present exemplary embodiment, controller 17 may perform the hydrogen-containing gas supply process not after the elapse of the predetermined time, but at a time of detection of decrease in the temperature of hydrogen generator 3 to a predetermined temperature (e.g., approximately outside temperature) by temperature sensor 12. The temperature of hydrogen generator 3 having decreased to a temperature close to an ambient temperature does not further decrease but is kept substantially unchanged. Accordingly, reduction of a consumption amount of material gas can be achieved by reduction of unnecessary supply of material (fuel gas) to the anode.

According to fuel cell system 1 of the present exemplary embodiment, when flame rod 11 does not detect combustion even after repetition of the ignition by igniter 10 a predetermined number of times, controller 17 may stop supply of material (fuel gas) and issue notification about abnormality. For example, it is determined that flame rod 11 does not detect combustion when no combustion by burner 4 is detected for a predetermined time (e.g., approximately 30 seconds). The notification about abnormality is issued by an alarm display on a display unit provided on fuel cell system 1, or by a sound, for example.

This process prevents a state where fuel gas cannot be supplied to the anode of fuel cell 2 due to abnormality of material gas channel 5 and fuel gas channel 6. Thus, there is obtained an effect of reduction of performance deterioration, such as a voltage drop, caused by increase in a current density in accordance with deterioration of resistance to carbon monoxide or decrease in an effective electrode area, for example, as a result of oxidation of the anode of fuel cell 2.

### SECOND EXEMPLARY EMBODIMENT

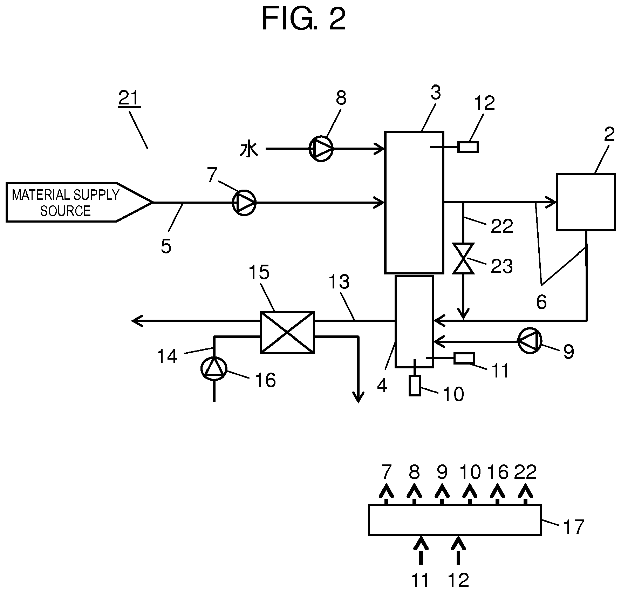

A configuration of fuel cell system 21 according to a second exemplary embodiment of the present invention is hereinafter described with reference to FIG. 2.

FIG. 2 is a block diagram illustrating an example of the configuration of fuel cell system 21 according to the second exemplary embodiment.

As illustrated in FIG. 2, fuel cell system 21 according to the present exemplary embodiment is different from fuel cell system 1 illustrated in FIG. 1 in that bypass channel 22, and bypass isolation valve 23 in a course of bypass channel 22 are further provided. According to this configuration, bypass channel 22 is configured to branch from fuel gas channel 6 on the upstream side of fuel cell 2, and join fuel gas channel 6 on the downstream side of fuel cell 2. Constituent elements in the present exemplary embodiment other than the foregoing constituent elements are similar to the corresponding constituent elements in the first exemplary embodiment. Accordingly, constituent elements identical or equivalent to the corresponding constituent elements illustrated in FIG. 1 have been given similar reference numbers, and the same explanation is not repeated.

Operations and effects of fuel cell system 21 according to the present exemplary embodiment are hereinafter described.

After completion of a start step of fuel cell system 21, controller 17 initially starts an electricity generation step. In the electricity generation step, booster pump 7 supplies material gas from a material supply source to hydrogen generator 3 via material gas channel 5 under control by controller 17. Thereafter, temperature sensor 12 detects a temperature of hydrogen generator 3 heated by combustion within burner 4. When it is detected by temperature sensor 12 that the temperature of hydrogen generator 3 has increased to a predetermined temperature or higher, water pump 8 supplies water to hydrogen generator 3 under control by controller 17. This process prevents carbon deposition by a catalyst of hydrogen generator 3.

Thereafter, hydrogen generator 3 reforms the supplied material gas and water by using the catalyst. Hydrogen generator 3 thereby generates fuel gas rich in hydrogen.

In this case, fuel gas discharged from hydrogen generator 3 is rich in carbon monoxide in an initial period of the start of fuel cell system 21. As described above, carbon monoxide may cause deterioration of fuel cell 2. Thus, according to the present exemplary embodiment, controller 17 opens bypass isolation valve 23 provided in the course of bypass channel 22. This configuration produces a bypass route of bypass channel 22 which bypasses the anode of fuel cell 2. In this case, fuel gas to be burned by burner 4 is directly supplied from hydrogen generator 3 to burner 4, and the fuel gas is burned for a predetermined time (e.g., period required for decreasing carbon monoxide amount in fuel gas to predetermined amount or smaller). As a result, deterioration of the anode of fuel cell 2 caused by carbon monoxide contained in the fuel gas decreases in the initial period of the start.

Subsequently, processing proceeds to an electricity generation step performed by fuel cell 2 under control by controller 17 after an elapse of a predetermined time. In this process, controller 17 closes bypass isolation valve 23 to isolate bypass channel 22. Thereafter, controller 17 supplies fuel gas discharged from hydrogen generator 3 to the anode of fuel cell 2 via fuel gas channel 6. Simultaneously, controller 17 supplies air to the cathode of fuel cell 2 as oxidant gas. Fuel cell 2 thus generates electricity by utilizing electrochemical reaction between the supplied fuel gas and oxidant gas. During this reaction, heat is generated as well as electricity. Accordingly, a temperature of fuel cell 2 becomes higher than an outside temperature.

Fuel cell 2 generates DC power, and outputs the DC power to the outside. The output DC power is converted into AC power by an inverter (not illustrated). The AC power thus converted is supplied to a load (e.g., electric device for home use) in cooperation with a power system.

As described above, burner 4 burns fuel gas not consumed by fuel cell 2 for electricity generation and discharged from fuel cell 2. Combustion heat thus generated from the fuel gas is supplied to hydrogen generator 3 to heat hydrogen generator 3. As a result, reaction efficiency at hydrogen generator 3 is improved.

Fuel cell system 21 operates in the manner described above.

Hereinafter, a specific operation of a stop-storage method performed by fuel cell system 21 according to the present exemplary embodiment is described.

After completion of the electricity generation step of fuel cell system 21, controller 17 shifts to a stop step to start a stop operation. In the stop step, controller 17 decreases supply of fuel gas and oxidant gas to fuel cell 2, and then stops only supply of oxidant gas. At this time, only fuel gas is supplied to fuel cell 2. Accordingly, in fuel cell 2, oxygen remaining in the cathode reacts with fuel gas supplied to the anode. In this condition, cell voltage of fuel cell 2 sharply drops. When the cell voltage drops to approximately 0.2 V, for example, controller 17 stops supply of fuel gas to fuel cell 2 to end the stop step.

When fuel gas supply to the anode of fuel cell 2 stops in response to the end of the stop step of fuel cell system 21, temperatures of hydrogen generator 3 and fuel cell 2 decrease to approximately the outside temperature by natural cooling. In this case, fuel gas channel 6 and exhaust gas channel 13 are opened to the atmosphere in the present exemplary embodiment. Accordingly, air is sucked from the atmosphere toward fuel cell 2 via exhaust gas channel 13, burner 4, and fuel gas channel 6 in accordance with decrease in the temperatures of hydrogen generator 3 and fuel cell 2. As a result, the anode of fuel cell 2 oxidized as described above deteriorates by deterioration of resistance of the anode to carbon monoxide poisoning.

Fuel cell system 21 of the present exemplary embodiment therefore performs a following hydrogen-containing gas supply process to prevent entrance of oxygen into the anode of fuel cell 2.

More specifically, after an elapse of a predetermined time from the end of the stop step, or after an elapse of a predetermined time from the end of the previous hydrogen-containing gas supply process, booster pump 7 supplies material gas to hydrogen generator 3 under control by controller 17. Thereafter, controller 17 opens bypass isolation valve 23 to directly supply fuel gas discharged from hydrogen generator 3 to burner 4 through the route bypassing fuel cell 2. The fuel gas thus supplied to burner 4 is ignited by igniter 10 to burn the fuel gas within burner 4. As a result, hydrogen generator 3 is heated.

According to the present exemplary embodiment, bypass isolation valve 23 is opened to produce a route bypassing fuel cell 2, whereby deterioration of fuel cell 2 caused by a large amount of carbon monoxide contained in fuel gas discharged from hydrogen generator 3 in the initial period of the start is more reliably reduced.

When it is subsequently detected that the temperature of hydrogen generator 3 has increased to a predetermined temperature or higher in accordance with heating by burner 4, water pump 8 supplies water to hydrogen generator 3 under control by controller 17. This process prevents carbon deposition by a catalyst of hydrogen generator 3. After an elapse of a predetermined time, controller 17 closes bypass isolation valve 23. Subsequently, controller 17 supplies fuel gas discharged from hydrogen generator 3 to the anode of fuel cell 2 via fuel gas channel 6.

Thereafter, air fan 9 supplies air to burner 4 under control by controller 17. Subsequently, igniter 10 ignites fuel gas within burner 4 under control by controller 17. Controller 17 thus detects a combustion state inside burner 4 based on detection by flame rod 11. Accordingly, whether or not fuel gas has been supplied to the anode of fuel cell 2 is accurately checked. More specifically, it is determined that fuel gas has been supplied to burner via the anode of fuel cell 2 based on detection of a combustion state inside the burner 4 by flame rod 11. Accordingly, it is determined that fuel gas is reliably supplied to the anode of fuel cell 2.

As described above, according to fuel cell system 21 of the present exemplary embodiment, controller 17 operates booster pump 7 such that material gas is supplied to at least hydrogen generator 3 at a predetermined time after an operation stop of hydrogen generator 3. Controller 17 further controls igniter 10 such that ignition takes place at burner 4. Thereafter, controller 17 detects combustion inside burner 4 based on detection by flame rod 11. It is therefore accurately determined whether or not the hydrogen-containing gas supply process for supplying hydrogen-containing gas to the anode has been performed. As a result, performance deterioration of fuel cell 2 is reduced by reduction of deterioration of resistance of the anode to carbon monoxide poisoning.

As described above, the fuel cell system according to the present invention is defined in claim 1.

According to this configuration, at the predetermined time after operation stops of the hydrogen generator and the fuel cell, the material gas is supplied to at least the hydrogen generator, and ignition is performed at the combustor. Accordingly, a combustion state of the combustor is detected by the combustion detector to accurately determine whether or not a hydrogen-containing gas supply process has been performed. As a result, performance deterioration of the fuel cell is effectively reduced by performing the hydrogen-containing gas supply process for supplying hydrogen-containing gas to the fuel cell.

The fuel cell system according to the present invention further includes: a bypass channel that branches from an upstream side of the fuel gas channel through which the fuel gas discharged from the hydrogen generator is supplied to the fuel cell, and connects to a downstream side of the fuel gas channel through which the fuel gas discharged from the fuel cell is supplied to the combustor; and a bypass isolation valve provided in the bypass channel. The controller may control the material supplying unit such that the material gas is supplied to at least the hydrogen generator at a predetermined time after operation stops of the hydrogen generator and the fuel cell. The controller may subsequently open the bypass isolation valve, supply the fuel gas discharged from the hydrogen generator to the combustor along a bypass that bypasses the fuel cell, and control the ignition device such that ignition is performed at the combustor.

According to this configuration, the bypass isolation valve is opened to produce a route bypassing the fuel cell. This configuration achieves reduction of performance deterioration of the fuel cell caused by a large amount of carbon monoxide contained in the fuel gas discharged from the hydrogen generator.

According to the fuel cell system of the present invention, the controller may control the material supplying unit such that supply of the material gas stops when the combustion detector detects combustion of the combustor after operation stops of the hydrogen generator and the fuel cell. According to configuration, wasteful consumption of material gas can be prevented.

The fuel cell system according to the present invention further includes: an exhaust gas channel through which combustion exhaust gas is discharged from the combustor; a heat recovery channel through which heat is collected from the exhaust gas channel; a heat exchanger that performs heat exchange between the exhaust gas channel and the heat recovery channel; and a heat recovery pump that supplies a heat medium to the heat recovery channel. The controller may operate the heat recovery pump when the ignition device performs the ignition, or when the combustion detector detects combustion.

According to this configuration, the controller operates the heat recovery pump when the ignition is performed, or when the combustion detector detects combustion. In this case, a temperature of the combustion exhaust gas can be lowered. In other words, heat of combustion exhaust gas can be collected by the heat medium of the heat recovery channel. As a result, freezing of the heat medium flowing within the heat recovery channel can be prevented even at a low outside temperature, such as in a winter season.

The fuel cell system according to claim 1 of the present invention further includes a temperature detector that detects a temperature of the hydrogen generator.

The predetermined time may be any time as long as the temperature of the hydrogen generator at the time decreases to a temperature lower than a predetermined temperature. The temperature of the hydrogen generator having decreased to a temperature close to an ambient temperature does not further decrease but is kept substantially unchanged. Accordingly, reduction of a consumption amount of material gas can be achieved by reduction of unnecessary supply of the material gas to an anode of the fuel cell.

The controller of the fuel cell system according to the present invention may control the material supplying unit such that supply of the material gas stops, and may issue notification to indicate abnormality, when the combustion detector does not detect combustion of the combustor even after repetition of the ignition by the ignition device a predetermined number of times. This configuration notifies about such an abnormal state that fuel gas cannot be supplied to the anode of the fuel cell. Accordingly, reduction of performance deterioration of the fuel cell can be achieved.

### INDUSTRIAL APPLICABILITY

A fuel cell system according to the present invention is capable of detecting presence or absence of combustion based on detection by a combustion detector to determine whether a hydrogen-containing gas supply process has been reliably performed. Accordingly, the fuel cell system of the present invention is a useful system applicable to a fuel cell system including a combustion detector which detects combustion of a combustor for heating a hydrogen generator, for example.

### REFERENCE MARKS IN THE DRAWINGS

- 1, 21: fuel cell system
- 2, 102: fuel cell
- 2a: anode
- 2b: cathode
- 2c: electrolyte
- 3: hydrogen generator
- 4: burner (combustor)
- 5: material gas channel
- 6: fuel gas channel
- 7: booster pump (material supplying unit)
- 8: water pump
- 9: air fan
- 10: igniter (ignition device)
- 11: flame rod (combustion detector)
- 12: temperature sensor
- 13: exhaust gas channel
- 14: heat recovery channel
- 15: heat exchanger
- 16: heat recovery pump (pump)
- 17: controller
- 22: bypass channel
- 23: bypass isolation valve

## Claims

1. A fuel cell system comprising:
a hydrogen generator (3) configured to reform material gas and generates hydrogen-containing gas;
a material supplying unit (7) configured to supply the material gas to the hydrogen generator (3);
a fuel cell (2) configured to generate electricity by using hydrogen-containing gas discharged from the hydrogen generator (3) and oxidant gas;
a combustor (4) configured to heat the hydrogen generator (3);
a fuel gas channel (6) through which fuel gas discharged from the hydrogen generator (3) is supplied to the combustor (4) via the fuel cell (2);
an ignition device (10) configured to perform ignition at the combustor (4);
a combustion detector (11) configured to detect combustion of the combustor (4);
a temperature detector (12) configured to detect a temperature of the hydrogen generator (3); and
a controller (17),
**characterized in that,**
at a predetermined time after operation stops of the hydrogen generator (3) and the fuel cell (2), the controller (17) is configured to control the material supplying unit (7) such that the material gas is supplied to at least the hydrogen generator (3), and control the ignition device (10) such that ignition is performed at the combustor (4),
wherein the predetermined time is a time when the temperature of the hydrogen generator (3) decreases to a temperature lower than a predetermined temperature, the predetermined temperature is close to ambient temperature.

2. The fuel cell system according to claim 1, further comprising:
a bypass channel (22) that branches from an upstream side of the fuel gas channel (6) through which the fuel gas discharged from the hydrogen generator (3) is supplied to the fuel cell (2), and connects to a downstream side of the fuel gas channel (6) through which the fuel gas discharged from the fuel cell (2) is supplied to the combustor (4); and
a bypass isolation valve (23) provided in the bypass channel (22),
wherein the controller (17) is configured to
control the material supplying unit (7) such that the material gas is supplied to at least the hydrogen generator (3) at a predetermined time after operation stops of the hydrogen generator (3) and the fuel cell (2),
open the bypass isolation valve (23),
supply the fuel gas discharged from the hydrogen generator (3) to the combustor (4) along a bypass that bypasses the fuel cell (2), and
control the ignition device (10) such that ignition is performed at the combustor (4).

3. The fuel cell system according to claim 1, wherein the controller (17) is configured to control the material supplying unit (7) such that supply of the material gas stops when the combustion detector (11) detects combustion of the combustor (4) after operation stops of the hydrogen generator (3) and the fuel cell (2).

4. The fuel cell system according to claim 1, further comprising:
an exhaust gas channel (13) through which combustion exhaust gas is discharged from the combustor (4);
a heat recovery channel (14) through which heat is collected from the exhaust gas channel (13);
a heat exchanger (15) configured to perform heat exchange between the exhaust gas channel (13) and the heat recovery channel (14); and
a heat recovery pump (16) configured to supply a heat medium to the heat recovery channel (14),
wherein the controller (17) is configured to operate the heat recovery pump (16) when the ignition device (10) performs the ignition, or when the combustion detector (11) detects combustion.

5. The fuel cell system according to claim 1, wherein when the combustion detector (11) does not detect combustion of the combustor (4) even after repetition of the ignition by the ignition device (10) a predetermined number of times, the controller (17) is configured to control the material supplying unit (7) such that supply of the material gas stops, and issues notification to indicate abnormality.

## Patentansprüche

1. Brennstoffzellensystem, mit:
einem Wasserstofferzeuger (3), der ausgebildet ist, Materialgas zu reformieren und Wasserstoff enthaltendes Gas zu erzeugen;
einer Materialzuführeinheit (7), die ausgebildet ist, das Materialgas dem Wasserstofferzeuger (3) zuzuführen;
einer Brennstoffzelle (2), die ausgebildet ist, elektrische Energie durch Verwenden von Wasserstoff enthaltendem Gas, das von dem Wasserstofferzeuger (3) abgegeben wird, und von oxidierendem Gas zu erzeugen;
einer Verbrennungseinheit (4), die ausgebildet ist, den Wasserstofferzeuger (3) zu heizen; einem Brennstoffgaskanal (6), durch welchen von dem Wasserstofferzeuger (3) abgegebenes Brennstoffgas über die Brennstoffzelle (2) der Verbrennungseinheit (4) zugeführt wird;
einer Zündeinrichtung (10), die ausgebildet ist, ein Zünden in der Verbrennungseinheit (4) auszuführen;
einem Verbrennungsdetektor (11), der ausgebildet ist, eine Verbrennung der Verbrennungseinheit (4) zu erfassen;
einem Temperaturdetektor (12), der ausgebildet ist, eine Temperatur des Wasserstofferzeugers (3) zu erfassen; und
einer Steuerung (17)
**dadurch gekennzeichnet, dass**
zu einer vorbestimmten Zeit nach einer Betriebsunterbrechung des Wasserstofferzeugers (3) und der Brennstoffzelle (2) die Steuerung (17) ausgebildet ist, die Materialzuführeinheit (7) derart zu steuern, dass das Materialgas zumindest dem Wasserstofferzeuger (3) zugeführt wird, und die Zündeinrichtung (10) derart zu steuern, dass eine Zündung in der Verbrennungseinheit (4) ausgeführt wird,
wobei die vorbestimmte Zeit eine Zeit ist, wenn die Temperatur des Wasserstofferzeugers (3) auf eine Temperatur abnimmt, die niedriger als eine vorbestimmte Temperatur ist, und wobei die vorbestimmte Temperatur nahe bei der Umgebungstemperatur liegt.

2. Brennstoffzellensystem nach Anspruch 1, das ferner aufweist:
einen Umgehungskanal (22), der von einer Stromaufwärtsseite des Brennstoffgaskanals (6) abzweigt, durch die das von dem Wasserstofferzeuger (3) abgegebene Brennstoffgas der Brennstoffzelle (2) zugeführt wird, und der mit einer Stromabwärtsseite des Brennstoffgaskanals (6) verbunden ist, durch die das aus der Brennstoffzelle (2) abgegebene Brennstoffgas der Verbrennungseinheit (4) zugeführt wird; und
ein Umgehungstrennventil (23), das in dem Umgehungskanal (22) vorgesehen ist,
wobei die Steuerung (17) ausgebildet ist,
die Materialzuführeinheit (7) derart zu steuern, dass das Materialgas zu einer vorbestimmten Zeit nach einer Unterbrechung des Betriebs des Wasserstofferzeugers (3) und der Brennstoffzelle (2) zumindest dem Wasserstofferzeuger (3) zugeführt wird,
das Umgehungstrennventil (23) zu öffnen,
das aus dem Wasserstofferzeuger (3) abgegebene Brennstoffgas der Verbrennungseinheit (4) entlang einer Umgehung zuzuführen, die die Brennstoffzelle (2) umgeht, und
die Zündeinrichtung (10) derart zu steuern, dass eine Zündung in der Verbrennungseinheit (4) ausgeführt wird.

3. Brennstoffzellensystem nach Anspruch 1, wobei die Steuerung (17) ausgebildet ist, die Materialzuführeinheit (7) derart zu steuern, dass die Zufuhr des Materialgases unterbrochen wird, wenn der Verbrennungsdetektor (11) eine Verbrennung in der Verbrennungseinheit (4) nach einer Unterbrechung des Betriebs des Wasserstofferzeugers (3) und der Brennstoffzelle (2) erfasst.

4. Brennstoffzellensystem nach Anspruch 1, das ferner aufweist:
einen Abgaskanal (13), durch den Verbrennungsabgas aus der Verbrennungseinheit (4) abgegeben wird;
einen Wärmerückgewinnungskanal (14), durch welchen Wärme aus dem Abgaskanal (13) gesammelt wird;
einen Wärmetauscher (15), der ausgebildet ist, den Wärmeaustausch zwischen dem Abgaskanal (13) und dem Wärmerückgewinnungskanal (14) auszuführen; und
eine Wärmerückgewinnungspumpe (16), die ausgebildet ist, dem Wärmerückgewinnungskanal (14) ein Wärmemedium zuzuführen,
wobei die Steuerung (17) ausgebildet ist, die Wärmerückgewinnungspumpe (16) zu aktivieren, wenn die Zündeinrichtung (10) die Zündung ausführt, oder wenn der Verbrennungsdetektor (11) eine Verbrennung erfasst.

5. Brennstoffzellensystem nach Anspruch 1, wobei, wenn der Verbrennungsdetektor (11) eine Verbrennung in der Verbrennungseinheit (4) selbst nach einer vorbestimmten Anzahl an Wiederholungen des Zündens durch die Zündeinrichtung (10) nicht erfasst, die Steuerung (17) ausgebildet ist, die Materialzuführeinheit (7) derart zu steuern, dass die Zufuhr des Materialgases unterbrochen und eine Benachrichtigung ausgegeben wird, um diese Normabweichung anzuzeigen.

## Revendications

1. Système de pile à combustible comprenant :
un générateur d'hydrogène (3) configuré pour reformer une matière gazeuse et générer un gaz contenant de l'hydrogène ;
une unité d'alimentation de matière (7) configurée pour alimenter la matière gazeuse au générateur d'hydrogène (3) ;
une pile à combustible (2) configurée pour générer de l'électricité en utilisant un gaz contenant de l'hydrogène déchargé par le générateur d'hydrogène (3) et un gaz oxydant ;
une chambre de combustion (4) configurée pour chauffer le générateur d'hydrogène (3) ;
un canal de gaz combustible (6) à travers lequel du gaz combustible déchargé par le générateur d'hydrogène (3) est alimenté à la chambre de combustion (4) via la pile à combustible (2) ;
un dispositif d'allumage (10) configuré pour mettre en oeuvre un allumage dans la chambre de combustion (4) ;
un détecteur de combustion (11) configuré pour détecter une combustion dans la chambre de combustion (4) ;
un détecteur de température (12) configuré pour détecter la température du générateur d'hydrogène (3) ; et
un contrôleur (17),
**caractérisé en ce que,**
un temps prédéterminé après l'arrêt du fonctionnement du générateur d'hydrogène (3) et de la pile à combustible (2), le contrôleur (17) est configuré pour contrôler l'unité d'alimentation de matière (7) de telle sorte que la matière gazeuse est alimentée au moins au générateur d'hydrogène (3), et pour contrôler le dispositif d'allumage (10) de telle sorte qu'un allumage est mis en oeuvre dans la chambre de combustion (4),
dans lequel le temps prédéterminé est un moment où la température du générateur d'hydrogène (3) diminue jusqu'à une température inférieure à une température prédéterminée, la température prédéterminée étant proche de la température ambiante.

2. Système de pile à combustible selon la revendication 1, comprenant en outre :
un canal de dérivation (22) qui se branche depuis un côté amont du canal de gaz combustible (6) à travers lequel le gaz combustible déchargé par le générateur d'hydrogène (3) est alimenté à la pile à combustible (2), et se connecte à un côté aval du canal de gaz combustible (6) à travers lequel le gaz combustible déchargé par la pile à combustible (2) est alimentée à la chambre de combustion (4) ; et
une vanne d'isolation de dérivation (23) pourvue dans le canal de dérivation (22),
dans lequel le contrôleur (17) est configuré
pour contrôler l'unité d'alimentation de matière (7) de telle sorte que la matière gazeuse est alimentée au moins au générateur d'hydrogène (3) à un temps prédéterminé après l'arrêt du fonctionnement du générateur d'hydrogène (3) et de la pile à combustible (2),
pour ouvrir la vanne d'isolation de dérivation (23),
pour alimenter le gaz combustible déchargé par le générateur d'hydrogène (3) à la chambre de combustion (4) via une dérivation qui contourne la pile à combustible (2), et
pour contrôler le dispositif d'allumage (10) de telle sorte qu'un allumage est mis en oeuvre dans la chambre de combustion (4).

3. Système de pile à combustible selon la revendication 1, dans lequel le contrôleur (17) est configuré pour contrôler l'unité d'alimentation de matière (7) de manière à arrêter l'alimentation de matière gazeuse quand le détecteur de combustion (11) détecte une combustion dans la chambre de combustion (4) après l'arrêt du fonctionnement du générateur d'hydrogène (3) et de la pile à combustible (2) .

4. Système de pile à combustible selon la revendication 1, comprenant en outre :
un canal de gaz d'échappement (13) à travers lequel le gaz d'échappement de combustion est déchargé de la chambre de combustion (4) ;
un canal de récupération de chaleur (14) à travers lequel de la chaleur du canal de gaz d'échappement (13) est collectée ;
un échangeur de chaleur (15) configuré pour mettre en oeuvre un échange de chaleur entre le canal de gaz d'échappement (13) et le canal de récupération de chaleur (14) ; et
une pompe de récupération de chaleur (16) configurée pour alimenter un fluide de chauffage au canal de récupération de chaleur (14),
dans lequel le contrôleur (17) est configuré pour commander la pompe de récupération de chaleur (16) quand le dispositif d'allumage (10) met en oeuvre l'allumage, ou quand le détecteur de combustion (11) détecte une combustion.

5. Système de pile à combustible selon la revendication 1 dans lequel, quand le détecteur de combustion (11) ne détecte pas de combustion dans la chambre de combustion (4) même après une répétition de l'allumage par le dispositif d'allumage (10) un nombre de fois prédéterminé, le contrôleur (17) est configuré pour contrôler l'unité d'alimentation de matière (7) de manière à arrêter l'alimentation de matière gazeuse, et envoie une notification pour indiquer une anomalie.
